# EUROPÄISCHE PATENTSCHRIFT

(11) **EP 2 117 971 B1**
(45) Veröffentlichungstag und Bekanntmachung des Hinweises auf die Patenterteilung: **07.09.2011**
(21) Anmeldenummer: 08700531.0
(22) Anmeldetag: 28.01.2008
(51) Int. Cl.: B65G 17/38, B65G 35/04, B65G 23/14

(54) **FÖRDERSYSTEM**
CONVEYING SYSTEM
SYSTÈME CONVOYEUR

(30) Priorität: 01.02.2007 CH 171072007
(43) Veröffentlichungstag der Anmeldung: 18.11.2009
(73) Patentinhaber: WRH Walter Reist Holding AG, 8272 Ermatingen (CH)
(72) Erfinder: REIST, Walter, CH-8340 Hinwil (CH)
(74) Vertreter: Frei Patent Attorneys
(86) Internationale Anmeldenummer: PCT/CH2008/000026
(87) Internationale Veröffentlichungsnummer: WO 2008/092287

(56) Entgegenhaltungen:
- EP-A- 0 077 467
- EP-A- 1 059 462
- EP-A1- 0 091 557
- CH-A- 538 065
- DE-A1- 2 203 495
- DE-A1- 3 136 335
- GB-A- 2 077 881
- US-A- 1 939 766

## Beschreibung

Die Erfindung liegt auf dem Gebiet der Vorrichtungen zur Kraftübertragung und bezieht sich auf ein Fördersystem gemäss dem Oberbegriff des Anspruchs 1.

### STAND DER TECHNIK

Ein derartiges Fördersystem ist beispielsweise aus der CH 538 065 (US 3,757,514) bekannt. Eine Gliederkette weist kugelgelenkartig verbundene Glieder auf, mit jeweils einem Gelenkkörper und einer Gelenkpfanne. Damit ein Gelenkkörper in die Gelenkpfanne des anschliessenden Gliedes gesteckt werden kann, ist die Gelenkpfanne geschlitzt und somit spreizfähig. Um ein Aufspreizen der Gelenkpfanne zu verhindern, kann eine Manschette über sie gelegt werden. Die Manschette kann auch zur reibungsarmen Lagerung des Kettengliedes in einer Führung dienen.

In der DE 31 21 835 A1 (oder GB 2 077 811) ist eine Kugelgelenk-Gliederkette beschrieben, deren einzelne Kettenglieder entlang einer Axialebene in zwei Hälften geteilt sind, und nach dem Verbinden mit einem anschliessenden Kettenglied jeweils von Halteringen zusammengehalten werden.

Die CH 655 916 (EP 0 091 557) beschreibt eine Vorrichtung zum Herstellen einer Verbindung zwischen Stationen einer Anlage. Die Vorrichtung weist eine Gliederkette ähnlich der in der DE 31 21 835 A1 beschriebenen auf, die aber noch Durchlassöffnungen entlang der Längsachse der Kettenglieder aufweist. Durch diese Durchlassöffnungen ist ein elektrisches Kabel geführt, welches zur Kommunikation zwischen zwei Stationen entlang der Gliederkette dient. Anstelle des elektrischen Kabels ist auch ein Lichtleiter oder ein Hohlleiter erwähnt. Die Gliederkette ist an einem ersten Ende aus einem Magazin heraus förderbar. Im Magazin liegt die Kette ungeordnet. Das Kabel ist an diesem ersten Ende der Gliederkette fest mit einer Hauptstation verbunden. Am anderen Ende der Gliederkette respektive des Kabels ist ein Kopplungsorgan angeordnet, welches mit Zwischenstationen, die entlang eines Führungskanals angeordnet sind, jeweils verbindbar ist. Dazu wird die Gliederkette in eine Position gefördert, bei der das Kopplungsorgan sich bei der Zwischenstation befindet. So kann das Kabel mit der Zwischenstation verbunden werden. Es können auch mehrere Kopplungsorgane vorliegen, die in einem Abstand entlang der Gliederkette angeordnet sind.

Die WO 98/13281 A1 offenbart ein Kraftübertragungsmittel zur Übertragung von Schubkräften. Es besteht aus einer Folge von Übertragungselementen, welche an ihren Stirnflächen aneinanderstossen und einen ringartigen Kamm respektive eine ringartige Nut aufweisen, die gegeneinander verschwenkbar sind. Die Übertragungselemente können eine axiale Durchführung aufweisen, durch welche ein Verbindungsmittel, zur losen Verbindung der Übertragungselemente, insbesondere ein elektrisches Kabel geführt ist.

Die DE 102 40 487 A1 zeigt eine Kette aus Kettengliedern und im Inneren der Kette angeordnetne Verbindungsgliedern. Die Verbindungsglieder weisen einen Abschnitt in Form einer Kalotte auf, der mit einer kugelförmigen Lagerfläche des benachbarten Kettengliedes zusammenarbeitet. In einer anderen Ausführungsform bilden benachbarte Kettenglieder jeweils ein Kugelgelenk, und wird die Kette durch ein längs und mittig der Kette verlaufendes Stahlseil zusammengehalten. Das Seil kann vorgespannt sein.

Die. DE 2 203 495 offenbart auch ein gattungsgemäßes Fördersystem.

### DARSTELLUNG DER ERFINDUNG

Es ist deshalb Aufgabe der Erfindung, ein Fördersystem der eingangs genannten Art zu schaffen, welche einfach herstellbar sind und gute Laufeigenschaften aufweisen.

Diese Aufgabe löst ein Fördersystem mit den Merkmalen des Anspruchs 1.

Das Fördersystem weist also einen Führungskanal mit mindestens einer im Führungskanal geführten und entlang des Führungskanals bewegbaren Fördereinheit auf, sowie eine Antriebseinheit zum Antrieb der mindestens einen Fördereinheit. Die Fördereinheit weist dabei eine Folge von mehreren Gliedern auf, wobei die Glieder jeweils an einem ersten Ende ein erstes Gelenkelement und an einem zweiten Ende ein zweites Gelenkelement aufweisen, wobei die ersten und zweiten Gelenkelemente, zueinander korrespondierend geformt sind und dadurch die Fördereinheit für die Übertragung von Schubkräften vorgesehen ist. Die Antriebseinheit weist mindestens einen Rollenkörper bestehend aus einer Mehrzahl von Rollen auf, wobei die Rollen in einer Umlaufbahn durch einen Rollenantrieb förderbar sind, wobei Rollen oder mit den Rollen mitbewegte Mitnehmer an den Gliedern der Fördereinheit angreifen und die Fördereinheit so antreiben.

Mit der Kombination einer solchen Fördereinheit mit einer solchen Antriebseinheit ist die Übertragung hoher Schubkräfte möglich.

Die Fördereinheit weist vorzugsweise eine Folge von mehreren Gliedern auf, die - in axialer Richtung betrachtet - jeweils an einem ersten Ende ein erstes Gelenkelement und an einem zweiten Ende ein zweites Gelenkelement aufweisen, wobei die ersten und zweiten Gelenkelemente zueinander korrespondierend geformt sind und die Glieder jeweils eine axiale Durchlassöffnung aufweisen. Dabei ist ein zur Aufnahme von Zugkräften ausgelegtes Zugmittel durch die Durchlassöffnungen der mehreren Glieder der Fördereinheit geführt, und an einem ersten Glied und an einem letzten Glied der Fördereinheit zur Aufnahme von Zugkräften befestigt.

Dadurch wird es möglich, eine Folge von mehreren Fördereinheiten aneinander zu koppeln und als Einheit in einem Fördersystem zu bewegen, insbesondere in einem Fördersystem mit Spontanförderung. Durch das Zugmittel sind die einzelnen Glieder vor dem Auseinanderziehen geschützt, auch wenn die Verbindungen zwischen den Gliedern selber nicht besonders stark sind, oder wenn die Glieder lose ineinandergesteckt sind und, wenn das Zugmittel nicht vorläge, auseinandergezogen werden können. Eine Fördereinheit ist somit mit einfachen Elementen herstellbar

In einer bevorzugten Ausführungsform ist das Zugmittel in sich elastisch oder ist mit einer elastischen Befestigung am ersten Glied und/oder am letzten Glied der Fördereinheit befestigt. Dabei ist dass das Zugmittel vorzugsweise vorgesparint. Das heisst, dass ungeachtet ihrer Lage und Biegung die Fördereinheit in sich stets eine bestimmte Spannung aufweist und die Glieder gegeneinander zieht.

Vorzugsweise ist das Zugmittel an einer Mehrzahl der übrigen Glieder der Fördereinheit, durch welche das Zugmittel verläuft, nicht befestigt. Eine Fördereinheit ist somit auf einfache Weise herstellbar, da nur die ersten und letzten Glieder mit dem Zugmittel verbunden werden müssen, und die übrigen Glieder nur gegeneinander geschoben oder zusammen geschnappt sein können.

In einer anderen bevorzugten Ausführungsform der Erfindung ist das Zugmittel an jedem der Glieder der Fördereinheit, durch welche das Zugmittel verläuft, befestigt.

Vorzugsweise sind die ersten Gelenkelemente Gelenkpfannen, und sind die zweiten Gelenkelemente Gelenkkörper, die mit den Gelenkpfannen jeweils Kugelgelenke bilden. Alternativ können die Gelenke auch durch eine Nut-Kamm Verbindung gemäss der eingangs erwähnten WO 98/13281 A1 gebildet sein.

Die Glieder bestehen vorzugsweise aus einstückigen Grundkörpern, an welchen die Gelenkpfannen und Gelenkkörper ausgeformt sind. Damit ist eine besonders einfache Massenherstellung, beispielsweise durch Spritzgiessen, möglich.

Vorzugsweise bilden die Gelenkpfannen und Gelenkkörper eine einschnappbare Verbindung, ohne dass die Gelenkpfannen Einschnitte oder Schlitze aufweisen, welche eine Aufweitung der Gelenkpfannen beim Einschnappen begünstigen würden. Dadurch wird verhindert, dass sich die eingeschnappte Verbindung einfach löst, und dass die Gelenkpfannen durch die Einschnitte geschwächt werden. Durch Halteringe, welche über die Gelenkpfannen geschoben sind und deren Aufweiten verhindern, kann ein Herausschnappen der Gelenkkörper aus den Gelenkpfannen noch besser verhindert werden.

Vorzugsweise ist die Durchlassöffnung im Bereich der ersten und/oder der zweiten Gelenkelemente aufgeweitet. Diese Aufweitung oder Verbreiterung kann beispielsweise durch eine konische Oberfläche realisiert sein. Dabei ist der Übergang von einem solchen Durchführungskonus zur Durchlassöffnung vorzugsweise abgerundet. Durch diese Aufweitung und die Abrundung wird ein Knicken des Zugmittels bei zueinander angewinkelten Gliedern reduziert..

Ein Fördersystem weist einen Führungskanal auf, sowie eine oder mehrere Fördereinheiten, welche im Führungskanal gefördert sind oder förderbar sind. Vorzugsweise sind die Fördereinheiten in beliebigen Abständen unabhängig voneinander entlang des Führungskanals förderbar. Dies bedeutet also, dass die Fördereinheiten nicht untereinander verbunden sind, und dass Antriebe zum selektiven Antrieb von einzelnen Fördereinheiten vorliegen. Der Führungskanal weist vorzugsweise einen kreisrunden Querschnitt auf. In gekrümmten Abschnitten der Bahn kann die Grösse des Querschnitts variieren oder ein Oval bilden.

In einer bevorzugten Ausführungsform der Erfindung ist der Führungskanal geschlitzt, so dass Fördereinheiten mit daran befestigten Haltemitteln wie Zangen oder Greifer oder Haken eingesetzt werden können, wobei die Haltemittel durch den Schlitz aus dem Führungskanal ragen.

Anstelle von mehreren separaten Fördereinheiten kann das Fördersystem auch nur eine einzelne Fördereinheit aufweisen, welche entlang der Länge des Fördersystems hin- und her bewegbar ist. Dazu weist die Fördereinheit in etwa dieselbe Länge auf wie der Führungskanal. Durch einen Antrieb kann die Fördereinheit zusammen mit daran befestigten Wirkelementen wie Greifern, elektrischen Kontakten etc. in vorgegebene Positionen entlang des Führungskanals gebracht werden. Dieser Bereich des Führungskanals, der diese Positionen umfasst, wird im Folgenden "aktiver Bereich" genannt. Im Betrieb kann die Fördereinheit grösstenteils aus dem aktiven Bereich des Führungskanals herausgezogen werden. Für solche Situationen ist in der eingangs erwähnten CH 655 916 ein Speicher vorgesehen, in welchem die Glieder der Fördereinheit aufgehäuft werden. Stattdessen wird hier aber ein weiterer Führungskanal oder ein weiterer Bereich des Führungskanals als Speicherbereich oder Speicherkanal vorgesehen. Der Speicherkanal nimmt also den Teil der Fördereinheit auf, der sich nicht im aktiven Bereich befindet. Vorzugsweise ist der Speicherkanal im wesentlichen parallel und entlang des aktiven Bereichs angeordnet.

Alternativ kann der Speicherkanal auch durch einen geraden Kanal gebildet sein, der insbesondere zur weiteren Verminderung von Reibungskräften senkrecht verlaufen kann.

In einer weiteren bevorzugten Ausführungsform der Erfindung bildet eine Fördereinheit eine geschlossene Schlaufe, welche um oder durch ein Antriebsmittel und um oder durch ein Abtriebsmittel geführt ist. Dabei sind das Antriebsmittel und das Abtriebsmittel zur Abgabe respektive Aufnahme von Zug- oder Schubkräften an die respektive von der Fördereinheit ausgebildet. Die Antriebs- respektive Abtriebsmittel können Zahnräder oder Antriebseinheiten wie oben beschrieben sein. Auf diese Weise wird also ein Getriebe gebildet, bei dem die Achsen der Antriebsmittel und Abtriebsmittel in einer beliebigen räumlichen Lage zueinander liegen können. Es ist dabei auch möglich, dass die Fördereinheit kein Zugmittel aufweist, da die Glieder in einem umlaufenden Führungskanal geführt sind.

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: einen Längsschnitt eines einstückigen Gliedes einer Fördereinheit;
- Figur 2: eine Fördereinheit mit mehreren solchen Gliedern;
- Figur 3: ein Glied mit einem Gleitring;
- Figur 4: eine Fördereinheit mit mehreren solcher Glieder in einer Führungsschiene;
- Figur 5: einen Verlauf einer Fördereinheit in einem Winkelgetriebe;
- Figuren 6 bis 10: weitere Ausführungsformen von Gliedern von Fördereinheiten;
- Figur 11: ein Getriebe, das kein Teil der Erfindung ist ;
- Figur 12: einen Antrieb für Fördereinheiten gemäss der Erfindung;
- Figur 13: einen Querschnitt durch einen Abschnitt des Antriebs;
- Figur 14: eine weitere Variante eines Antriebs;
- Figur 15: einen entsprechenden weiteren Querschnitt; und
- Figur 16: eine Fördereinheit mit einem Speicherkanal.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

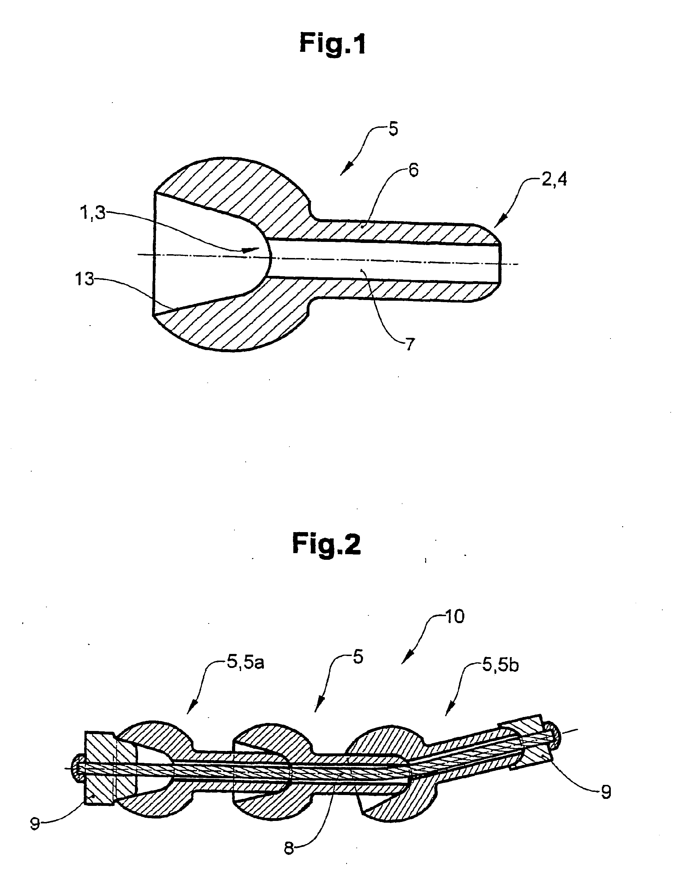

**Figur 1** zeigt einen Längsschnitt eines einstückigen Gliedes 5 einer Fördereinheit. Das Glied 5 ist rotationssymmetrisch bezüglich der Symmetrieachse der Darstellung. Das Glied 5 weist ein erstes Gelenkelement 1, welches als Gelenkpfanne 3 ausgebildet ist, sowie ein zweites Gelenkelement 2, welches als Gelenkkörper 4 ausgebildet ist, auf. Das Glied 5 weist einen einstückigen Grundkörper 6 auf, an welchem die Gelenkpfanne 3 und der Gelenkkörper 4 ausgeformt sind. Die Gelenkpfanne 3 und der Gelenkkörper 4 sind zueinander korrespondierend ausgebildet, d.h. sie weisen Innen- und Aussen-Kugelflächen mit demselben Radius auf, so dass sie ein Kugelgelenk formen. Dazu wird jeweils ein Gelenkkörper 4 eines Gliedes in die Gelenkpfanne 3 eines anschliessenden Gliedes gesteckt. Die Gelenkpfanne 3 geht jeweils in einen Innenkonus 13 über, welcher die Bewegbarkeit des eingesteckten Gelenkkörpers 4 im Gelenk auf einen bestimmten Winkel begrenzt. Eine Aussenfläche der Gelenkpfanne 3 ist zum Gleiten entlang einer Führung vorgesehen. Dazu weist das erste Gelenkelement 1 vorzugsweise die Form einer Kugel oder allgemeiner eines räumlichen Rotationsellipsoids auf. Das zweite Gelenkelement 2 weist vorzugsweise die Form eines Rotationszylinders auf, welcher an einem Ende an das erste Gelenkelement 1 anschliesst und am anderen Ende in den Gelenkkörper 4 übergeht. Dadurch sind die Glieder 5 lose ineinander steckbar, sie weisen also keine Schnappverbindung auf. Die Glieder 5 können somit durch Ziehen voneinenander getrennt werden, sofern sie nicht durch ein Zugmittel gegeneinander gezogen werden.

Jedes der Glieder 5 weist vorzugsweise eine Durchlassöffnung 7 auf, welche entlang der Längsachse des Gliedes 5 von der Gelenkpfanne 3 zum Gelenkkörper 4 verläuft.

**Figur 2** zeigt eine Fördereinheit 10 mit mehreren solchen Gliedern 5. Ein Zugmittel 8, beispielsweise ein Drahtseil oder ein Kunstoffseil, ist durch die Durchlassöffnungen 7 der Glieder 5 geführt und jeweils mittels eines Befestigungsmittels 9 an einem ersten Glied 5a und einem letzten Glied 5b der Fördereinheit 10 fixiert. Das Zugmittel 8 ist vorzugsweise vorgespannt, so dass die Glieder 5 der Fördereinheit 10 gegeneinander gedrückt und zusammengehalten werden. Die Vorspannung kann erzeugt werden, indem das Zugmittel 8 elastisch ist, oder indem das Zugmittel 8 mit einer elastischen Befestigung mit dem ersten oder letzten Glied 5 verbunden ist (nicht illustriert). Leichte Längenänderungen des Zugmittels 8, welche beim Krümmen der Fördereinheit 10 entstehen können, werden durch diese Elastizität ausgeglichen.

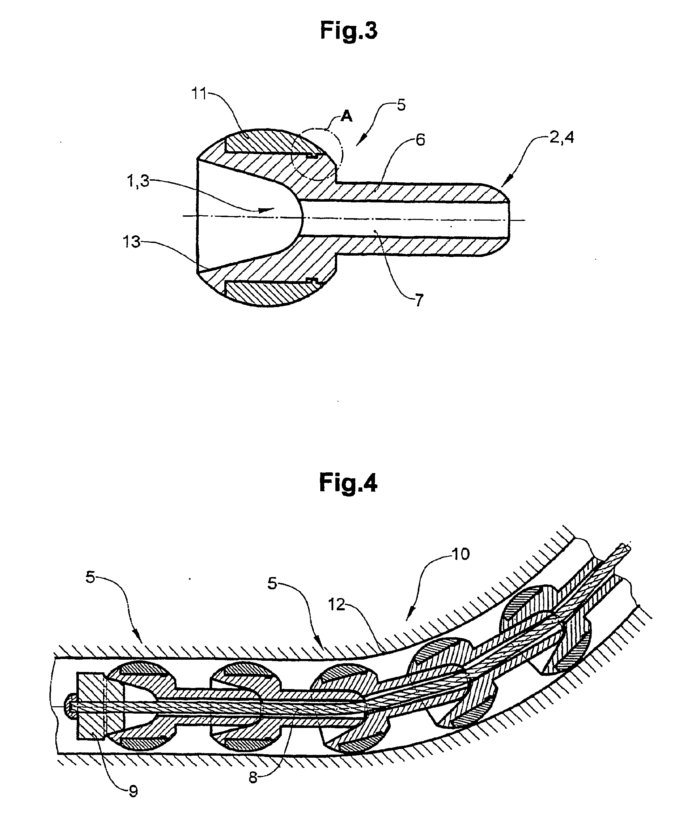

**Figur 3** zeigt ein Glied 5 mit einem Gleitring 11. Der Gleitring 11 weist vorzugsweise eine zylindrische Innenfläche auf, welche über eine korrespondierende Aussenfläche des ersten Gelenkelementes 1 geschoben ist. Dabei ist, wie im mit "A" bezeichneten Bereich gezeigt, am ersten Gelenkelement 1 eine ringförmige Nut ausgebildet, in welche ein keilförmiger Vorsprung des Gleitrings 11 einschnappt. Umgekehrt kann natürlich der Keil am ersten Gelenkelement 1 und die Nut am Gleitring 11 vorliegen. Der Gleitring 11 ist vorzugsweise aus einem Material geformt, welche eine reibungsarme und verschleissarme Materialpaarung mit dem Material eines Führungskanals bewirkt.

**Figur 4** zeigt eine Fördereinheit mit mehreren solcher Gliedern 5 in einer Führungsschiene oder einem Führungskanal 12. Der Führungskanal 12 kann geschlitzt sein, so dass Halteelemente für zu fördernde Gegenstände, die an einem oder mehreren der Glieder 5 befestigt sein können, durch den Schlitz aus dem Führungskanal 12 hinausragen können. Der Führungskanal 12 hat einen im wesentlichen kreisförmigen oder elliptischen Querschnitt, entsprechend dem Aussendurchmesser der Glieder 5.

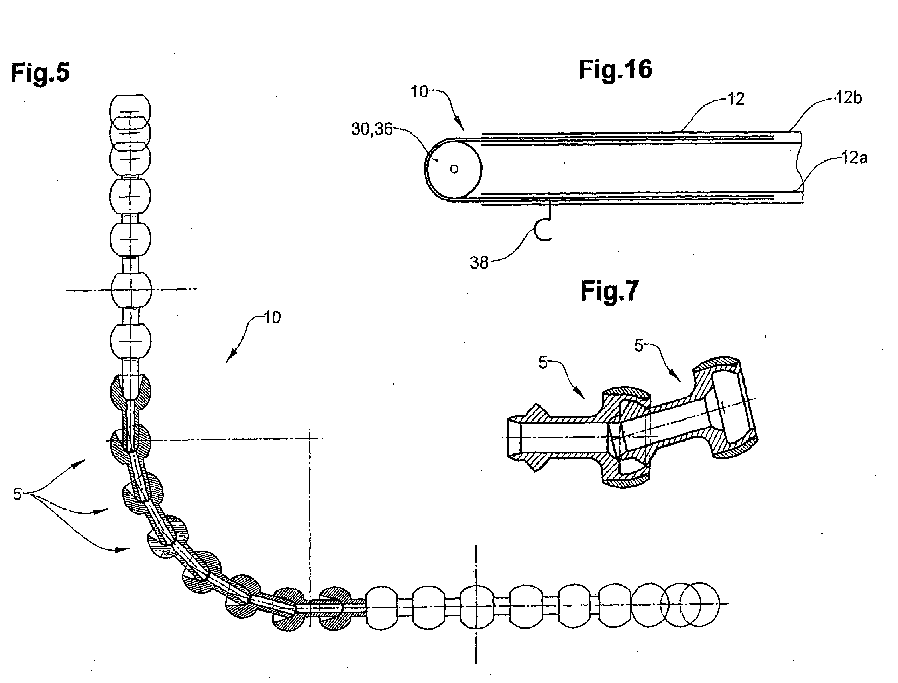

**Figur 5** zeigt einen beispielhaften Verlauf einer Fördereinheit in einem Winkelgetriebe. Dabei ist, der besseren Veranschaulichung wegen, der Führungskanal 12, welcher die Fördereinheit 10 umgibt, nicht gezeichnet. Es ist also möglich, einem Führungskanal 12 einen beliebigen räumlichen Verlauf zu geben, so dass er in drei Dimensionen gekrümmt sein kann. Lediglich der Krümmungsradius ist entsprechend dem öffnungswinkel des Innenkonus 13 der Glieder 5 beschränkt.

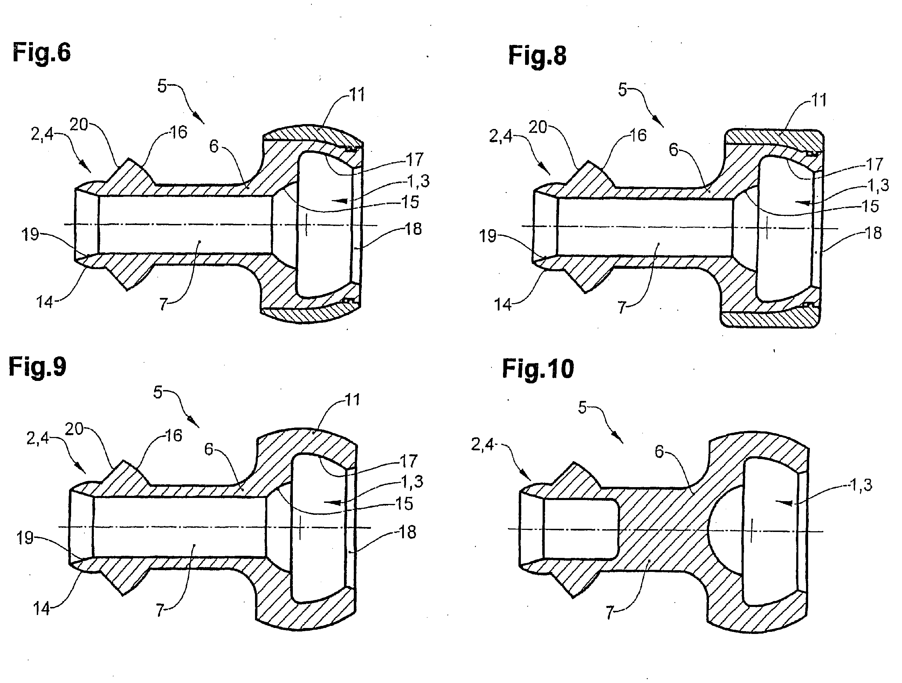

**Figuren 6** bis **10** zeigen weitere Ausführungsformen von Gliedern von Fördereinheiten. In allen diesen Ausführungsformen sind die ersten und zweiten Gelenkelemente 1, 2 so ausgebildet, dass sie eine Schnappverbindung bilden. Zudem bilden die ersten und zweiten Gelenkelemente 1, 2 jeweils Kugelgelenke mit zwei konzentrischen Kugeln. Die kleinere Lagerfläche und Kugelfläche ist definiert durch eine erste Gelenkkörperfläche 14 am Gelenkkörper 4 und eine korrespondierende erste Gelenkpfannenfläche 15 an der Gelenkpfanne 3. Die grössere Lagerfläche und Kugelfläche ist definiert durch eine zweite Gelenkkörperfläche 16 am Gelenkkörper 4 und eine korrespondierende zweite Gelenkpfannenfläche 17 an der Gelenkpfanne 3. Der kleinere Kugelabschnitt nimmt axiale Stosskräfte zwischen den Gliedern 5 auf und zentriert die Glieder aufeinander, der grössere Kugelabschnitt nimmt axiale Zugkräfte zwischen den Gliedern auf. Eigenschaften und Vorteile einer ähnlichen Anordnung sind in der eingangs erwähnten US 3,757,514 erwähnt . Jedoch weisen die Glieder 5 gemäss der vorliegenden Anmeldung keine Einschnitte auf, welche die Gelenkpfannen 3 spreizfähig machen. Die Gelenkpfanne 3 weist an einem äusseren Ende der zweiten Gelenkpfannenfläche 17 eine Gelenkpfannenöffnung 18 auf, welche grösser ist als der Durchmesser der ersten Gelenkkörperfläche 14, aber ein wenig kleiner ist als der grösste Durchmesser der zweiten Gelenkkörperfläche 16.

Die Gelenkpfannen 3 und insbesondere die Glieder 5 als ganzes sind vorzugsweise aus einem technischen Kunststoff gefertigt wie beispielsweise Nylon oder Polyoxymethylen (POM) oder Polyamid (PA) oder Polyphenylensulfid (PPS), oder aus einem gefüllten Kunststoff mit Einlagerungen aus beispielsweise Glas-, Mineral- oder Karbonfasern. Wenn die Glieder 5 Einlagerungen aufweisen, werden sie vorzugsweise mit Gleitringen 11 ohne Einlagerungen kombiniert. Als Herstellungsverfahren für grosse Stückzahlen ist ein Spritzgussverfahren vorzusehen. Dies gilt auch für die Glieder 5 gemäss den Figuren 1 bis 5.

Die Gelenkpfannen 3 sind aufgrund der Elastizität des Materials ein wenig aufweitbar, und die Gelenkkörper 4 sind ein wenig komprimierbar, so dass eine Schnappverbindung herstellbar ist. Um dies zu erleichtern, ist eine Übergangsfläche 20 zwischen der ersten Gelenkkörperfläche 14 und der zweiten Gelenkkörperfläche 16 angeschrägt, d.h. sie bildet eine konische Fläche, wobei der Konus mit der Längsachse des Gliedes 5 koaxial ist und seine gedachte Spitze zum zweiten Gelenkelement 2 hin zeigt. Beim Zusammenstecken zweier Glieder 5 zentriert die Übergangsfläche die beiden Glieder und weitet die Gelenkpfannenöffnung 18 auf.

Die Durchlassöffnung 7 führt von der ersten Gelenkpfannenfläche 15 zur ersten Gelenkkörperfläche 14. Die Durchlassöffnung 7 weist vorzugsweise im Bereich der ersten Gelenkkörperfläche 14 eine Aufweitung in Form eines Durchführungskonus 19 auf. Vorzugsweise ist der Übergang zwischen der Innenfläche der Durchlassöffnung 7 und dem Durchführungskonus 19 abgerundet (nicht abgebildet). Dadurch wird eine Belastung eines Zugmittels 8 durch Abknicken vermieden.

**Figuren 6** bis **8** zeigen Varianten, bei welcher nach dem Einschnappen zweier Glieder 5 ein Gleitring 11 über das jeweilige erste Gelenkelement 1 geschoben wird. Dadurch wird ein Lösen der Schnappverbindung erschwert. **Figur 6** zeigt einen Gleitring 11 mit einer in drei Dimensionen gekrümmten, beispielsweise rotationsellipsoiden Aussenfläche. Diese weist eine gute Beweglichkeit in gekrümmten Förderbahnen auf. **Figur 8** zeigt ein Glied 5 mit einen Gleitring 11 mit einer hauptsächlich zylindrischen Aussenfläche. Dieses Glied 5 wird dadurch in einem zylindrischen Führungskanal 12, welcher einen nur knapp grösseren Durchmesser als der Gleitring 11 aufweist, in axialer Richtung stabilisiert. Dafür muss aber in Kurvenbereichen der Führungskanal 12 einen leicht grösseren Durchmesser als in geraden Abschnitten aufweisen, um das in den Kurven notwendige Abknicken der Glieder 5 zu erlauben. Die Gleitringe 11 sind analog zur Ausführungsform der Figur 3 eingerastet.

**Figur 7** zeigt zwei ineinandergesteckte Glieder 5 gemäss der Variante der **Figur 6**, mit einem maximalen Winkel von 15° zwischen den Achsrichtungen der Glieder 5. Bei diesem Winkel fluchten die Wände des Durchführungskonus 19 des einen Gliedes mit der Durchlassöffnung 7 des anschliessenden Gliedes 5.

**Figur 9** zeigt ein Glied 5 ohne Gleitring 11. Eine Aussenfläche der Gelenkpfanne 3 bildet also eine Gleitfläche, auf welcher das Glied 5 durch den Führungskanal 12 gleitet. Die übrigen Eigenschaften sind analog zu den anderen einschnappenden Gliedern 5.

**Figur 10** zeigt ein Glied 5 ohne Durchlassöffnung. Dabei ist aber im Bereich des ersten Gelenkelements 1 anstelle einer Durchlassöffnung nur eine teilweise in axialer Richtung in den Grundkörper 6 hineinführende Öffnung, beispielsweise ein Sackloch, vorgesehen. Diese Öffnung erstreckt sich entlang des Bereiches des zweiten Gelenkelementes 2, so dass dessen Kompression zum Zusammenschnappen der Glieder erleichtert wird. Natürlich kann ein solche Öffnung auch mit den anderen Ausführungsformen kombiniert sein.

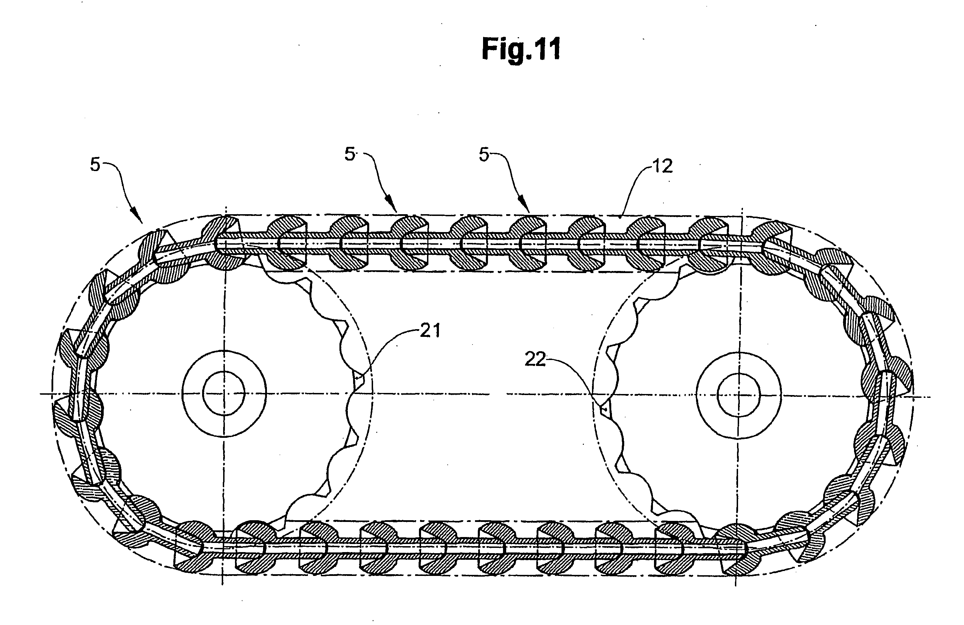

**Figur 11** zeigt ein Getriebe, welches durch Kombination von Gliedern 5 gemäss der Ausführungsform der Figur 1 realisiert ist, aber auch mit den andern Gliedern 5 gemäss den **Figuren 3** oder **6 bis 10** realisierbar ist. Die Glieder 5 sind um Antriebsmittel 21 und Abtriebsmittel 22 geführt, welche hier durch Zahnräder gebildet sind. Das Fördersystem der Figur 11 ist kein Teil der Erfindung. Alternativ können sie auch durch Antriebe wie in den nachfolgenden Figuren gezeigt realisiert sein. Die Funktion von Antriebsmittel 21 und Abtriebsmittel 22 kann natürlich, je nachdem wo ein Antrieb angeordnet ist, umgekehrt werden. Der Abschnitt zwischen Antriebsmittel 21 und Abtriebsmittel 22 kann, wie in der **Figur 5** gezeigt, um beliebige Ecken geführt sein. Die Achsrichtungen der Antriebsmittel 21 und Abtriebsmittel 22 können also in einem beliebigen Winkel windschief zueinander stehen.

Die Glieder 5 können auch durch ein Zugmittel 8 miteinander verbunden sein, wobei das Zugmittel 8 an einem oder mehreren oder an gar keinem der Glied 5 befestigt und auf Zug belastbar ist. Je nachdem, ob und an welchen Gliedern 5 das Zugmittel 8 befestigt ist, kann eine Folge von Gliedern 5 Zugkräfte und Schubkräfte, oder aber nur Schubkräfte übertragen.

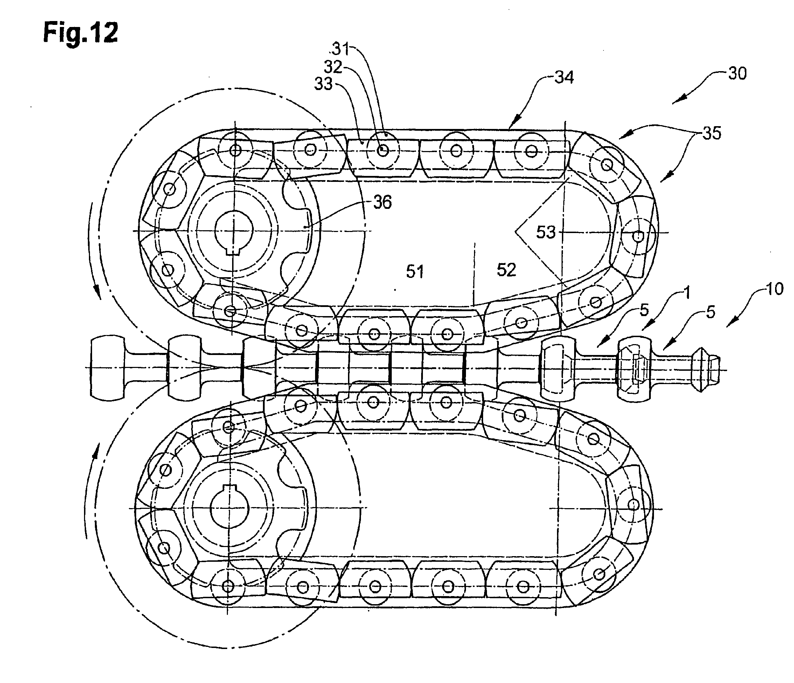

**Figur 12** zeigt einen Antrieb für Fördereinheiten 10 gemäss der Erfindung, mit einer Antriebseinheit 30. Ein solcher Antrieb löst das Problem, dass entweder eine Umschlingung eines Zahnrades, wie in der **Figur 11****,** erforderlich ist, oder aber - bei einem geradlinigen Verlauf der Fördereinheiten 10 - die Antriebskraft nur an einem Punkt der Fördereinheit 10 eingeleitet werden kann. Dieser Antrieb weist ein Rollenelement im Sinne der WO 2005/113391 A1 oder der WO 2005/113392 A1 desselben Anmelders auf.

Das Rollenelement weist also einen Rollenkörper 35 auf, welcher in einer Umlaufbahn 34 abrollt und geführt ist. Dabei weist der Rollenkörper 35 eine Mehrzahl von Rollen 31 auf, welche miteinander verbunden sind oder lose aufeinanderfolgen und durch Distanzierungskörper 33 voneinander getrennt sind. Die Distanzierungskörper 33 bilden vorzugsweise eine Lagerung für Achsen 32 der Rolle 31 und weisen, in Laufrichtung der Rollen 31 gesehen, in mindestens eine Richtung, eine grössere Ausdehnung als die Rollen 31 auf. Dadurch kann ein Gegenkörper - im vorliegenden Fall eine Fördereinheit 10 - über die Rollen 31 an der Umlaufbahn 34 abrollen, wobei die Distanzierungskörper 33 verhindern, dass sich aufeinanderfolgende Rollen 31 aneinander reiben. Die Distanzierungskörper 33 weisen in Laufrichtung vorne und hinten eine zylindrische Stirnfläche auf, die koaxial zu den Rollenachsen 32 ist. Dadurch rollen diese Flächen aufeinanderfolgender Distanzierungskörper 33 in den gekrümmten Bahnabschnitten der Umlaufbahn 34 reibungsfrei aneinander ab. Der Rollenkörper 35 wird durch einen Rollenantrieb 36, beispielsweise ein Zahnrad, welches in oder zwischen die Rollen des Rollenkörpers 35 eingreift, angetrieben.

Der Abstand zwischen den Rollenachsen 32 ist gleich dem Abstand zwischen zwei aufeinanderfolgenden Gliedern 5. Die Rollen 31 sind beiderseits in je einem Distanzierungskörper 33 gelagert und greifen in einem mittleren Bereich der Rollen 31 (im Querschnitt der Umlaufbahn 34, in Laufrichtung der Rollen 31 gesehen) an den Gliedern 5 der Fördereinheiten 10 an. Dabei drücken die Rollen 31 beispielsweise gegen radial hervorstehende Aussenflächen an den ersten Gelenkelementen 1

In einer anderen Ausführungsform der Erfindung liegt anstelle des Rollenkörpers 35 eine Rollenkette mit aneinander gekoppelten Kettengliedern vor, wobei die Kettenglieder Mitnehmer aufweisen, welche zwischen die Glieder 5 der Fördereinheiten 10 eingreifen und so eine Schubkraft und/oder eine Zugkraft an die Fördereinheiten 10 übertragen.

Vorzugsweise weist die Umlaufbahn 34 einen geraden, ersten Bahnabschnitt auf, auf welchem der Rollenkörper 35 parallel zur Fördereinheit 10 geführt ist und mit der Fördereinheit 10 im Eingriff steht, und einen dritten Bahnabschnitt, auf welchem der Rollenkörper 35 umgelenkt und gegebenenfalls auch angetrieben wird. Der dritte Bahnabschnitt ist beispielsweise kreisförmig. Zwischen dem ersten und dem dritten Bahnabschnitt ist als Übergang ein zweiter Bahnabschnitt angeordnet. Dieser zweite Bahnabschnitt weist einen grösseren Krümmungsradius auf als der dritte, also eine geringere Krümmung. Dadurch wird der Rollenkörper 35 beim Eingreifen graduell an die Glieder 5 der Fördereinheit 10 heran geführt, und es wird verhindert, dass sich nicht exakt positionierte Rollen 31 und Glieder 5 verklemmen.

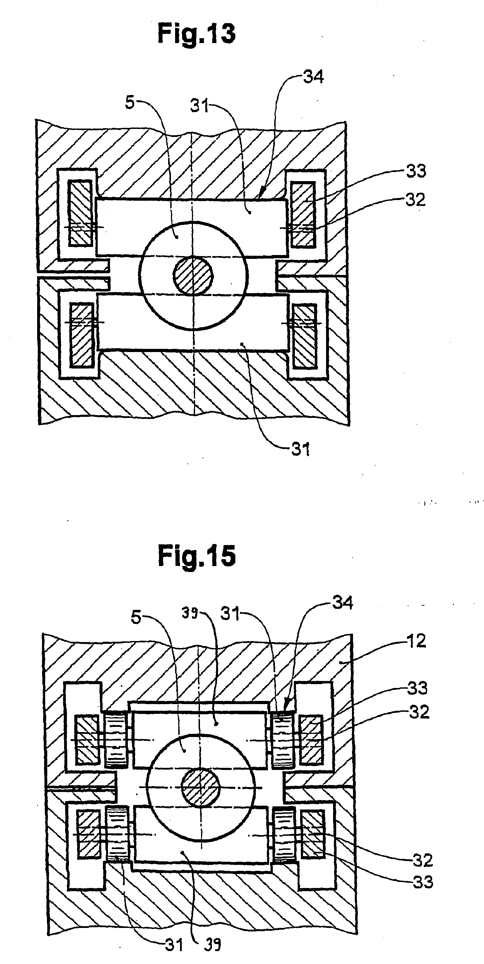

**Figur 13** zeigt einen Querschnitt durch einen Abschnitt des Antriebes der Figur 12 im Bereich der geförderten Glieder 5.

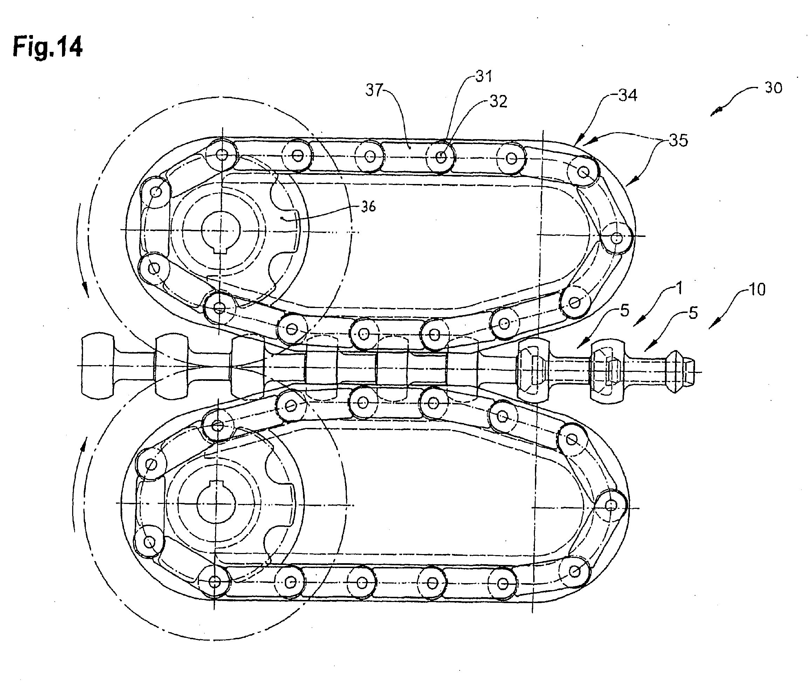

**Figur 14** zeigt eine weitere Variante eines Antriebs. Dieser ist ähnlich wie jene der Figur 12 aufgebaut, jedoch liegen anstelle der Distanzierungskörper 33 anders geformte zweite Distanzierungskörper 37 vor. Diese zweiten Distanzierungskörper 37 sind an einem ersten Ende mit den Rollenachsen 32 verbunden, d.h. die Rollenachsen 32 sind beweglich oder fest (je nachdem, wie die Rollenachsen 32 mit den Rollen 31 verbunden sind) in die zweiten Distanzierungskörper 37 gesteckt. Am ersten Ende weisen die zweiten Distanzierungskörper 37 im Laufrichtung eine nach aussen gerichtete zylindrische Oberfläche auf, koaxial zu der jeweiligen Rollenachse 32. Am gegenüberliegenden, zweiten Ende weisen die zweiten Distanzierungskörper 37 eine nach innen gerichtete zylindrische Oberfläche mit demselben Radius auf. Diese umschliesst die nach aussen gerichtete zylindrische Oberfläche des anschliessenden zweiten Distanzierungskörpers 37. Bei gekrümmten Bahnabschnitten der Umlaufbahn 34 gleiten aufeinanderfolgende zweite Distanzierungskörper 37 wie bei einem Zylindergelenk gegeneinander.

**Figur 15** zeigt einen Querschnitt durch einen Abschnitt des Antriebes der Figur 14 im Bereich der geförderten Glieder 5. Hier sind die Rollen 31. separat von Mitnehmern 39 drehbar gelagert. Die Mitnehmer 39 greifen in die Lücken zwischen den Gliedern 5 ein und stossen - je nach Bewegungsrichtung - diese an der vorderen oder hinteren Seite der Gelenkelemente. Solche Mitnehmer 39 sind natürlich auch in der Ausführungsform der **Figur 12** einsetzbar.

**Figur 16** zeigt schematisch eine Fördersystem mit einem Führungskanal 12 mit einem aktiven Bereich 12a, durch welchen ein Haltemittel 38 geführt und bewegt wird, und einem Speicherkanal 12b, in welchem derjenige Teil der Fördereinheit 10, der nicht im aktiven Bereich 12a liegt, gespeichert ist. Der Antrieb 30 ist schematisch als Rad gezeichnet, kann aber auch durch eine Antriebseinheit 30 basierend auf einem Rollenkörper 35 gebildet sein.

### BEZUGSZEICHENLISTE

- 1: erstes Gelenkelement
- 2: zweites Gelenkelement
- 3: Gelenkpfanne
- 4: Gelenkkörper
- 5: Glied
- 5a, 5b: erstes/letztes Glied
- 6: Grundkörper
- 7: Durchlässöffnung
- 8: Zugmittel
- 9: Befestigungsmittel
- 10: Fördereinheit
- 11: Gleitring
- 12: Führungskanal
- 13: Innenkonus
- 14: erste Gelenkkörperfläche
- 15: erste Gelenkpfannenfläche
- 16: zweite Gelenkkörperfläche
- 17: zweite Gelenkpfannenfläche
- 18: Gelenkpfannenöffnung
- 19: Durchführungskonus
- 20: Übergangsfläche
- 21: Antriebsmittel
- 22: Abtriebsmittel
- 30: Antriebseinheit
- 31: Rollen
- 32: Rollenachsen
- 33: Distanzierungskörper
- 34: Umlaufbahn
- 35: Rollenkörper
- 36: Rollenantrieb
- 37: zweite Distanzierungskörper
- 38: Haltemittel
- 39: Mitnehmer

## Patentansprüche

1. **Fördersystem**, aufweisend einen Führungskanal (12) mit mindestens einer im Führungskanal (12) geführten und entlang des Führungskanals (12) bewegbaren Fördereinheit (10) und eine Antriebseinheit (30) zum Antrieb der mindestens einen Fördereinheit (10),
wobei die Fördereinheit (10) eine Folge von mehreren Gliedern (5) aufweist, und die Glieder (5) jeweils an einem ersten Ende ein erstes Gelenkelement (1) und an einem zweiten Ende ein zweites Gelenkelement (2) aufweisen, wobei die ersten und zweiten Gelenkelemente (1, 2) zueinander korrespondierend geformt sind und dadurch die Fördereinheit (10) für die Übertragung von Schubkräften vorgesehen ist,
**dadurch gekennzeichnet, dass** die Antriebseinheit (30) mindestens einen Rollenkörper (35) bestehend aus einer Mehrzahl von Rollen (31) aufweist, die in einer Umlaufbahn (34) durch einen Rollenantrieb (36) förderbar sind, wobei Rollen (31) oder mit den Rollen (31) mitbewegte Mitnehmer an den Gliedern (5) der Fördereinheit (10) angreifen und die Fördereinheit (10) so antreiben.

2. Fördersystem gemäss Anspruch 1, **dadurch gekennzeichnet, dass** die Antriebseinheit (30) zum Einlaufen der Rollen (31) in einen ersten Bahnabschnitt in welchem die Fördereinheiten (10) angetrieben werden, respektive zum Auslaufen der Rollen (31) aus diesem ersten Bahnabschnitt, einen zweiten Bahnabschnitt aufweist, der in einen dritten Bahnabschnitt führt, wobei der zweite Bahnabschnitt eine kleinere Krümmung aufweist als der dritte Bahnabschnitt.

3. Fördersystem gemäss Anspruch 2, **dadurch gekennzeichnet, dass** beim Übergang der Rollen (31) vom zweiten Bahnabschnitt in den dritten Bahnabschnitt , oder umgekehrt, die Rollen (31) sich nicht in einem umhüllenden Zylinder um die Fördereinheit (10) befinden.

4. Fördersystem gemäss einem der Ansprüche 1 bis 3, **dadurch gekennzeichnet, dass** die Fördereinheit (10) eine geschlossene Schlaufe bildet und um oder durch die Antriebseinkeit (30) und um oder durch ein Abtriebsmittel geführt ist, wobei die Antriebseinkeit (30) und das Abtriebsmittel zur Abgabe respektive Aufnahme von Zug- oder Schubkräften an die Fördereinheit (10) respektive von der Fördereinheit (10) ausgebildet sind.

5. Fördersystem gemäss einem der Ansprüche 1 bis 4, **dadurch gekennzeichnet, dass** sie mehrere separat förderbare Fördereinheiten (10) aufweist, welche in beliebigen Abständen unabhängig voneinander entlang des Führungskanals (12) förderbar sind.

6. Fördersystem gemäss einem der Ansprüche 1 bis 5, **dadurch gekennzeichnet, dass** der Führungskanal (12) einen ersten Bereich (12a) aufweist, durch den eine Fördereinheit (10), deren Länge der Länge dieses ersten Bereiches (12a) entspricht, förderbar ist, und der Führungskanal (12) einen zweiten Bereich (12b) als Speicherbereich aufweist.

7. Fördersystem gemäss Anspruch 6, **dadurch gekennzeichnet, dass** der zweite Bereich (12b) entlang des ersten Bereiches (12a) geführt ist.

8. Fördersystem gemäss einem der Ansprüche 1 bis 7, **dadurch gekennzeichnet, dass** die Fördereinheiten (10) jeweils ein Haltemittel zum dauernden oder vorübergehenden Festhalten von zu transportierenden Gegenständen aufweisen.

## Claims

1. **Conveying system** comprising a guiding channel (12) with at least one conveyor unit (10) guided in the guiding channel (12) and movable along the guiding channel (12) and a drive unit (30) for driving the at least one conveyor unit (10),
wherein the conveyor unit (10) comprises a succession of several links (5) and the links each comprise on a first end a first joint element (1) and on a second joint end (2) a second joint element (2), wherein the first and second joint elements (1, 2) are shaped corresponding to one another and thus the conveyor unit (10) is designed for the transmission of pushing forces,
**characterized in that** the drive unit (30) comprises at least one roller body (35) consisting of a plurality of rollers (31), which are conveyable along an orbit (34) by means of a roller drive (36), wherein the rollers (31) or tappets moved along with the rollers (31) engage in the links (5) of the conveyor unit (10) and thus drive the conveyor unit (10).

2. Conveying system according to claim 1, **characterized in that** the drive unit (30) comprises, for running the rollers (31) into a first orbit section, in which the conveyor units (10) are driven, or for running the rollers (31) off this first orbit section, a second orbit section which leads to a third orbit section, wherein the second orbit section comprises a smaller curvature than the third orbit section.

3. Conveying system according to claim 2, **characterized in that** the rollers (31), when passing from the second orbit section into the third orbit section, or vice versa, the rollers (31) are not located within a cylindrical envelope enclosing the conveyor unit (10).

4. Conveying system according to one of claims 1 to 3, **characterized in that** the conveyor unit (10), which forms a closed loop and is guided around or through the drive unit (30) and around or through a drive output means, wherein the drive unit (30) and the drive output means are designed for exerting or, respectively, absorbing traction forces or pushing forces to the conveyor unit or, respectively, from the conveyor unit (10).

5. Conveying system according to one of claims 1 to 4, **characterized in that** it comprises several separately conveyable conveyor units (10), which are conveyable along the guiding channel (12) at arbitrary distances independent of each other.

6. Conveying system according to one of claims 1 to 5, **characterized in that** the guiding channel (12) comprises a first region (12a) through which a conveyor unit (10), the length of which corresponds to the length of this first region (12a), is conveyable and the guiding channel (12) comprises a second region (12b) as a storage region.

7. Conveying system according to claim 6, **characterized in that** the second region (12b) is guided along the first region (12a).

8. Conveying system according to one of claims 1 to 7, **characterized in that** the conveyor units (10) each comprise a holding means for the permanent or temporary holding of objects to be transported.

## Revendications

1. **Système de convoyage**, présentant un canal de guidage (12) qui comporte au moins une unité de convoyage (10) guidée dans le canal de guidage (12) et déplaçable le long du canal de guidage (12) et une unité d'entraînement (30) pour entraîner la au moins une unité de convoyage (10),
dans laquelle l'unité de convoyage (10) présente une séquence de plusieurs maillons (5) et dans laquelle les maillons (5) présentent respectivement un premier élément articulé (1) sur une première extrémité et un second élément articulé (2) sur une seconde extrémité, et dans laquelle le premier et le second élément articulé (1, 2) sont formés en correspondance l'un par rapport à l'autre et de cette manière, l'unité de convoyage (10) est prévue pour la transmission des forces de poussée,
**caractérisé en ce que**
l'unité d'entraînement (30) présente au moins un corpus à rouleaux (35) qui est constitué d'une pluralités de rouleaux (31) qui peuvent être convoyés dans une trajectoire de circulation (34) par un entraînement à rouleaux (36) et dans lequel les rouleaux (31) ou les tenons d'entraînement déplacés en même temps que les rouleaux (31) sur les maillons (5) de l'unité de convoyage (10) sont en attaque et entraînent ainsi l'unité de convoyage (10).

2. Système de convoyage selon la revendication 1, **caractérisé en ce que** l'unité d'entraînement (30), pour faire entrer les rouleaux (31) dans un premier tronçon de trajectoire pour le rodage des rouleaux (31), ou pour faire sortir les rouleaux (31) de ce premier tronçon de trajectoire, présente un second tronçon de trajectoire qui mène vers un troisième tronçon de trajectoire et dans lequel le second tronçon de trajectoire présente une courbure plus petite que le troisième tronçon de trajectoire.

3. Système de convoyage selon la revendication 2, **caractérisé en ce que**, lors de la transition des rouleaux (31) depuis le second tronçon de trajectoire jusque dans le troisième tronçon de trajectoire ou inversement, les rouleaux (31) ne se trouvent pas dans un cylindre enveloppant autour de l'unité de convoyage (10).

4. Système de convoyage selon l'une des revendications 1 à 3, **caractérisé en ce que** l'unité de convoyage (10) forme une boucle fermée et est guidée autour ou par l'unité d'entraînement (30) et dans lequel l'unité d'entraînement (30) est guidée autour ou par un moyen de sortie, dans lequel l'unité d'entraînement (30) et le moyen de sortie sont réalisés pour fournir un logement respectif pour les forces de traction ou de poussée sur l'unité de convoyage (10) ou sont réalisés respectivement par l'unité de convoyage (10).

5. Système de convoyage selon l'une des revendications 1 à 4, **caractérisé en ce qu'**il présente plusieurs unités de convoyage (10) qui peuvent être convoyées séparément et lesquelles peuvent être convoyées à des distances quelconques indépendamment l'une de l'autre le long du canal de guidage (12).

6. Système de convoyage selon l'une des revendications 1 à 5, **caractérisé en ce que** le canal de guidage (12) présente une première zone (12a) à travers laquelle il est possible de convoyer une unité de convoyage (10) dont la longueur correspond à la longueur de cette première zone (12a) et **en ce que** le canal de guidage (12) présente une seconde zone (12b) comme zone d'accumulation.

7. Système de convoyage selon la revendication 6, **caractérisé en ce que** la seconde zone (12b) est guidée le long de la première zone (12a).

8. Système de convoyage selon l'une des revendications 1 à 7, **caractérisé en ce que** les unités de convoyage (10) présentent respectivement un moyen de maintien pour le maintien permanent ou provisoire des objets qui doivent être transportés.
